# EUROPEAN PATENT APPLICATION

(11) **EP 4 768 352 A1**
(43) Date of publication of application: **01.07.2026**
(21) Application number: 24223446.6
(22) Date of filing: 27.12.2024
(51) Int. Cl.: B60W 10/02, B60W 10/06, B60W 10/11, B60W 30/18, F16H 61/12

(54) **SYSTEM AND METHOD FOR CONTROLLING A POWERTRAIN SYSTEM OF A VEHICLE**

(71) Applicant: Volvo Truck Corporation, 405 08 Göteborg (SE)
(72) Inventor: SCHELLENBERGER, Markus, 417 23 GÖTEBORG (SE); KARLSSON, Lars, 417 29 GÖTEBORG (SE); RYBERG, Henrik, 417 19 GÖTEBORG (SE)
(74) Representative: Kransell & Wennborg KB

(57) **Abstract**

The present disclosure relates to a computer system (100) for a powertrain system (11) of a vehicle (10), the powertrain system comprising an internal combustion engine (12) connectable to one or more drive wheels (21), a transmission arrangement (17) arranged to be coupled to the internal combustion engine by means of a controllable clutch (14), the transmission arrangement having a gearbox (16) with a displaceable gear engaging device (30), the gear engaging device being displaceable between a gear wheel disengaging position and a gear wheel engaging position, wherein the computer system comprises processing circuitry (102) configured to selectively operate the powertrain system in a number of operational modes comprising at least an engine stop freewheeling mode (ES-FM), in which an output shaft of the engine is non-rotating, and the engine is disconnected from the one or more drive wheels, and wherein the processing circuitry is further configured to determine, during the engine stop freewheeling mode, that a position (31) of the gear engaging device is different from an expected position (32) of the gear engaging device for an engaged gear; and, in response to that the position of the gear engaging device is determined to be different from the expected position, determine to return the gear engaging device to the expected position.

## Description

### TECHNICAL FIELD

The disclosure relates generally to the field of controlling a powertrain system of a vehicle, while the vehicle is moving, and, more specifically, to an automatically controlled powertrain system for vehicles. In particular aspects, the disclosure relates to a computer system, powertrain system, vehicle and methods for controlling the powertrain system during engine shutdown in a freewheeling mode. The disclosure can be applied to any type of vehicle, including heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional internal combustion engine vehicles operate continuously when the engine is running, even when idling at traffic lights, stuck in traffic, or during extended periods of inactivity. Such constant engine operation results in unnecessary fuel consumption and increased emissions, contributing to environmental pollution and increased fuel costs for vehicle owners. To address these issues, various stop and start technologies have been developed, such as engine idle stop-start systems, which shut off the engine when the vehicle is stationary and automatically restart it when the driver releases the brake or engages the accelerator.

In recent years, there has been a growing demand for more sophisticated and intelligent engine stop-and-start systems for heavy-duty vehicles that can adapt to a wider range of driving conditions. The development of automatic and predictive engine stop-and-start systems addresses these challenges by incorporating predictive algorithms, real-time data sources, and advanced control strategies. Automatic and predictive engine stop-and-start systems aim to provide smoother, more efficient, and less intrusive engine stop-and-start experiences for drivers while increasing fuel savings and emissions reduction.

However, in connection with the use of such systems in a vehicle, such as a heavy-duty vehicle, there is still a need for further improving the operations of the powertrain system, while the vehicle is moving.

### SUMMARY

According to a first aspect of the disclosure, there is provided a computer system for a powertrain system of a vehicle. The powertrain system comprises an internal combustion engine connectable to one or more drive wheels, a transmission arrangement arranged to be coupled to the internal combustion engine by means of a controllable clutch. The transmission arrangement comprises a gearbox with a displaceable gear engaging device. The gear engaging device is displaceable between a gear wheel disengaging position and a gear wheel engaging position. The computer system further comprises processing circuitry configured to selectively operate the powertrain system in a number of operational modes, including at least an engine stop freewheeling mode (ES-FM), in which an output shaft of the engine is non-rotating, and the engine is disconnected from the one or more drive wheels. The processing circuitry is further configured to determine, during the engine stop freewheeling mode, that a position of the gear engaging device is different from an expected position of the gear engaging device for an engaged gear. In response to determining that the position of the gear engaging device is different from the expected position, the processing circuitry determines to return the gear engaging device to the expected position.

The first aspect of the disclosure may seek to address the challenge of maintaining the gearbox of a transmission arrangement in an engaged state during a freewheeling mode, where the engine is shut down and disconnected from the drive wheels. The disclosure is based at least partly on an insight that a complete engaged driveline is typically required to restart the engine with a controllable clutch upon exiting an engine stop freewheeling mode. In this context, however, unintended gear disengagement, sometimes referred to as gear jump-out, may create operational difficulties and inefficiencies during engine restarts (in connection with terminating the engine stop freewheeling mode). More specifically, challenges may arise during open clutch roll events, such as when the powertrain system is freewheeling with the engine temporarily shut down while the vehicle remains in motion. In such scenarios, unintended gear disengagement in the gearbox may occur, creating difficulties because a complete engaged driveline is required to restart the engine with the clutch. Vibrations, uneven road terrain, or a combination of both may contribute to unintended gear disengagement. Moreover, during engine shutdown while the vehicle is in motion, the rotational speeds of the gearbox input and output shafts cannot be synchronized, which is typically required to reengage a gear. Hence, maintaining gear engagement in the gearbox during operation of the powertrain system in the engine stop freewheeling mode is desirable, particularly to enable engine restart using the clutch instead of a starter motor.

A technical benefit is provided by enhancing control over the position of one or more gear engaging devices during the engine stop freewheeling mode through monitoring and correcting unexpected positional changes. The proposed computer system provides control to maintain a gearbox gear in an engaged state, which is required for restarting the engine using the clutch of the powertrain system. Restarting the engine with the clutch provides a more fuel-efficient option compared to restarting the engine with a starter motor.

Detecting unexpected changes and controlling the affected gear engaging device to return to its original (expected) position may prevent or at least reduce excessive differences in gearbox shaft speed. Control over the gear engaging device contributes to smoother gear reengagement and reduced wear on powertrain components. The configuration of the processing circuitry improves drivability, operational efficiency, and mechanical durability of the powertrain system. When the position of at least one gear engaging device in the gearbox changes to an unexpected state, the processing circuitry acts to return the gear engaging device to its original position. Acting promptly prevents, or at least reduce excessive divergence of gearbox shaft speeds, which could otherwise prevent successful gear reengagement. To this end, the proposed computer system provides monitoring of the engaged gear during temporary engine shutdowns while the vehicle is in motion.

It should be noted that the engine stop freewheeling mode typically refers to a mode of the powertrain system, in which the state that the output shaft of the engine is non-rotating amounts to an engine shutdown, and further that the engine is disconnected from the drive axle of the drive wheel(s).

Optionally in some examples, including in at least one preferred example, the processing circuitry may be configured to determine that the position of the gear engaging device is different from the expected position of the gear engaging device by comparing data indicative of a current position of the gear engaging device with a threshold value indicative of the expected position of the gear engaging device. A technical benefit may include ensuring accurate detection of deviations in the position by setting a predefined threshold for an excessive positional difference in a timely manner, enabling timely corrective action.

Optionally in some examples, including in at least one preferred example, the processing circuitry may be configured to receive data indicative of the position of the gear engaging device during the engine stop freewheeling mode. A technical benefit may include enabling continuous real-time monitoring of the gear engaging device to provide a more rapid detection of unexpected positional changes.

Optionally in some examples, including in at least one preferred example, the processing circuitry may be configured to detect a change in the position of the gear engaging device relative to the expected position of the gear engaging device. A technical benefit may include enabling precise detection of even minor positional changes in the gear engaging device.

Optionally in some examples, including in at least one preferred example, the processing circuitry may be configured to detect the change in the position of the gear engaging device based on the received data indicative of the position of the gear engaging device during the engine stop freewheeling mode. A technical benefit may include enabling even more precise detection of minor positional changes in the gear engaging device.

Optionally in some examples, including in at least one preferred example, the processing circuitry may be configured to compare the detected change in the position of the gear engaging device with a threshold value indicative of the expected position of the gear engaging device. A technical benefit may include further refining positional detection by using a comparison against a predefined threshold, potentially providing an even more precise corrective action.

Optionally in some examples, including in at least one preferred example, the positional difference of the gear engaging device may be an axial positional difference along an axial direction A. The axial direction typically refers to an axial direction of the gearbox, such as the axial direction of the shaft(s) within the gearbox. A technical benefit may include facilitating determination of the positional difference by focusing on linear displacements along a single axis.

Optionally in some examples, including in at least one preferred example, the processing circuitry may be configured to determine to return the gear engaging device to the expected position if the determined difference differs from the expected position by more than 20 mm. In this context, the determined difference may be measured along the axial direction of the gearbox. Hence, the difference in position refers to a difference in a linear position. A technical benefit may include providing a quantifiable reference for detecting displacement, such as axial displacement, improving the consistency of corrective measures.

Optionally in some examples, including in at least one preferred example, the data indicative of the position of the gear engaging device may be collected by a sensor. The sensor may be configured to monitor the position of the gear engaging device. A technical benefit may include providing real-time feedback on the position of the gear engaging device. By way of example, the sensor is a positional sensor.

Optionally in some examples, including in at least one preferred example, the sensor may be arranged at, or on, the gear engaging device. A technical benefit may include facilitating the arrangement of the sensor within the gearbox, allowing placement of the sensor in close proximity to the monitored component.

Optionally in some examples, including in at least one preferred example, the processing circuitry may be configured to control the gear engaging device to return to the expected position.

Optionally in some examples, including in at least one preferred example, the gear engaging device may be arranged in the gearbox to engage a gear wheel of a main gear.

Optionally in some examples, including in at least one preferred example, the gear engaging device may be arranged in the gearbox to engage a gear wheel of a split gear.

Optionally in some examples, including in at least one preferred example, the gear engaging device may be arranged in the gearbox to engage a gear wheel of a range gear of the gearbox.

Optionally in some examples, including in at least one preferred example, a first gear engaging device may be arranged in the gearbox to engage a gear wheel of a main gear, a second gear engaging device may be arranged in the gearbox to engage a gear wheel of a split gear, and a third gear engaging device may be arranged in the gearbox to engage a gear wheel of a range gear.

Optionally in some examples, including in at least one preferred example, the processing circuitry may be configured to monitor the duration of a gear reengagement attempt by the gear engaging device in the expected position. A technical benefit may include providing enhanced control over gear reengagement by tracking the duration of attempts and ensuring timely intervention if conditions are not met. Optionally in some examples, including in at least one preferred example, the processing circuitry may be configured to monitor the duration of the gear reengagement attempt by the gear engaging device in the expected position prior to exit engine stop freewheeling mode, during restart of the engine, or after engine restart.

Optionally in some examples, including in at least one preferred example, the processing circuitry may be configured to abort the gear reengagement attempt if the monitored duration exceeds a predefined time limit. A technical benefit may include reducing wear on mechanical components by avoiding prolonged and potentially harmful reengagement attempts.

Optionally in some examples, including in at least one preferred example, the processing circuitry may be configured to control the powertrain system into the engine stop freewheeling mode from topography data. A technical benefit may include enabling the powertrain system to predict and adapt to varying road conditions and gradients by using topography data to enhance the timing and conditions for entering the engine stop freewheeling mode, thereby enhancing fuel efficiency.

Optionally in some examples, including in at least one preferred example, the processing circuitry may be configured to determine to exit the engine stop freewheeling mode by restarting the engine using a controllable clutch. A technical benefit may include providing a more fuel-efficient and seamless transition back to powered operation compared to using a starter motor, reducing wear on components and improving overall drivability.

Optionally in some examples, including in at least one preferred example, the processing circuitry may be further configured to predict a potential operational mode for the powertrain system after the freewheeling mode so as to determine whether the engine is to be used for propulsion or for an engine braking operation. A technical benefit may include improving vehicle safety and operational efficiency by proactively determining the powertrain's next operational mode based on anticipated driving conditions.

According to a second aspect of the disclosure, there is provided a powertrain system comprising a computer system according to the first aspect, and further comprising an internal combustion engine, a controllable clutch, and a transmission arrangement arranged to be coupled to the internal combustion engine by means of the controllable clutch. The transmission arrangement further comprises an output shaft configured to be coupled to a driven axle of a set of wheels. The second aspect of the disclosure may seek to solve the same problem as described for the first aspect of the disclosure. Thus, effects and features of the second aspect of the disclosure are largely analogous to those described above in connection with the first aspect of the disclosure.

According to a third aspect of the disclosure, there is provided a vehicle comprising the computer system of the first aspect and/or a powertrain system according to the second aspect. The third aspect of the disclosure may seek to solve the same problem(s) as described for the first to second aspects of the disclosure. Thus, effects and features of the third aspect of the disclosure are largely analogous to those described above in connection with the first and second aspects of the disclosure. By way of example, the vehicle is a heavy-duty vehicle.

Optionally in some examples, including in at least one preferred example, the vehicle is an internal combustion engine vehicle. An internal combustion engine vehicle is a vehicle that relies solely on an internal combustion engine for propulsion, without the assistance of electric motors or fuel cells that are characteristic of hybrid or fully electric vehicles. Optionally in some examples, including in at least one preferred example, the vehicle is a non-electric vehicle. In this context, the term non-electric vehicle refers to a vehicle avoid of any electric storage and power system configured to provide traction power to the vehicle. Such electric storage system may be a battery system in combination with an electric machine and/or fuel cell system in combination with an electric machine. In other words, a non-electric vehicle is a vehicle comprising the internal combustion engine as the primary, or the only, power source for the powertrain system. The use of the computer system for controlling a non-electric vehicle, while the vehicle is moving, may be particularly useful where the internal combustion engine is the only available power source for the vehicle.

According to a fourth aspect of the disclosure, there is provided a computer-implemented method for controlling a powertrain system of a vehicle. The powertrain system comprises an internal combustion engine connectable to one or more drive wheels. The powertrain system is operable in a number of operational modes, including at least an engine stop freewheeling mode (ES- FM), in which an output shaft of the engine is non-rotating and the engine is disconnected from the one or more drive wheels. The method comprises: determining, during the engine stop freewheeling mode, and by processing circuitry of a computer system, that a position of a gear engaging device is different from an expected position of the gear engaging device for an engaged gear; and determining, by processing circuitry of the computer system, to return the gear engaging device to the expected position in response to that the position of the gear engaging device is determined to be different from the expected position.

The fourth aspect of the disclosure may seek to solve the same problem(s) as described for the first to third aspects of the disclosure. Thus, effects and features of the fourth aspect of the disclosure are largely analogous to those described above in connection with the first to third aspects of the disclosure.

According to a fifth aspect of the disclosure, there is provided a computer program product comprising program code for performing, when executed by the processing circuitry of the first aspect, the method of the fourth aspect.

According to a sixth aspect of the disclosure, there is provided a non-transitory computer-readable storage medium comprising instructions, which when executed by the processing circuitry of the first aspect, cause the processing circuitry to perform the method of fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates an exemplary view of a vehicle comprising a powertrain system and a computer system having a processing circuitry configured to control the powertrain system according to an example.
**FIG. 2** illustrates an example of controlling a powertrain system of a vehicle according to an example.
**FIG. 3** is a flow chart of an exemplary method for controlling a powertrain system of a vehicle according to an example.
**FIG. 4** is a schematic diagram of an exemplary computer system for implementing examples disclosed herein, according to an example.
**FIGS. 5 and 6** illustrate an example of a gearbox of the powertrain system in FIG. 1 according to an example.

### DETAILED DESCRIPTION

The detailed description set forth below provides information and examples of the disclosed technology with sufficient detail to enable those skilled in the art to practice the disclosure.

In the field of vehicles, there is an increasing demand for improving the fuel efficiency and reducing emissions of the internal combustion engine (ICE). One operation for enhancing fuel efficiency and lowering emissions in a powertrain system is referred to as freewheeling. Freewheeling is commonly applied in heavy-duty vehicles. The purpose of freewheeling in heavy-duty vehicles is to save fuel and reduce engine load under certain driving conditions. Freewheeling is commonly used when the vehicle is descending downhill or traveling on a slope. There are typically two types of freewheeling modes. In one type of freewheeling operation, the engine is disconnected or disengaged from the driving wheel(s), allowing the vehicle to coast freely (in contrast to a conventional coasting mode). Hereby, the heavy-duty vehicle can take advantage of gravitational forces to maintain or increase speed while consuming minimal fuel. Such type of freewheeling operation can be particularly useful for improving fuel efficiency and reducing wear and tear on the braking system during downhill descents. Freewheeling can be engaged manually by the driver or automatically by the vehicle's control system, e.g. as a part of the automatic and predictive engine stop-and-start system. In the context of the disclosure the control system typically refers to a computer system comprising processing circuitry. When the driver and/or an automatic vehicle control system initiates freewheeling, the transmission is typically shifted to a neutral or coasting position, decoupling the engine from the drivetrain. In some cases, the engine may idle at a minimal RPM to maintain essential functions like power steering and braking. Such mode of operation may be denoted as a freewheeling mode with the engine disconnected.

Freewheeling may also include a specific mode of operation where the engine is typically shutdown (in addition to being disconnected from the driving wheels). More specifically, in the context of the present disclosure, such freewheeling mode refers to an operational mode in which the output shaft of the engine is non-rotating, and the engine is disconnected from the one or more drive wheels. An operational mode where the output shaft of the engine is non-rotating typically signifies that the engine is in a non-active state, such as in a shutdown state, engine off state, standby mode or the like. By way of example, in such freewheeling mode, the engine is thus shutdown, and not engaged with the drivetrain for propulsion. In addition, in such freewheeling mode, no fuel is supplied to the engine. For ease of reference, this freewheeling mode is denoted as the engine stop freewheeling mode (ES-FM). The engine stop freewheeling mode thus refers to a freewheeling mode with the engine shutdown, and disconnected from the drive wheel(s).

Operating the powertrain system in the engine stop freewheeling mode ES-FM contributes to even better fuel consumption and reduced emissions. Additionally, the engine stop freewheeling mode ES-FM allows for quicker attainment of the target speed, as compared to other operational modes, such as a coasting mode, wherein the engine remains connected to the driving wheels. The engine stop freewheeling mode ES-FM thus facilitates more efficient acceleration and speed management, particularly in situations such as downhill driving. As such, prolonging the operation of the powertrain system in the engine stop freewheeling mode ES-FM enables the maintenance of a higher average speed.

During the engine stop freewheeling mode ES-FM, there is typically a need to maintain the parts of the powertrain system downstream the clutch in an engaged state. In other words, a complete engaged driveline is typically required to restart the engine with the clutch in connection with exiting the engine stop freewheeling mode. Otherwise, it may not be possible to use the kinetic energy from the rotating wheel(s) for restarting the engine when controlling the clutch to its torque transfer position. In this context, however, unintended gear disengagement, sometimes referred to as gear jump-out, may create operational difficulties and inefficiencies during engine restarts (in connection with terminating the engine stop freewheeling mode). More specifically, challenges may arise during open clutch roll events, such as when the powertrain system is freewheeling with the engine temporarily shut down while the vehicle remains in motion. In such scenarios, unintended gear disengagement in the gearbox may occur due to vibrations, uneven road terrain, or a combination of both. Moreover, during engine shutdown while the vehicle is in motion, the rotational speeds of the gearbox input and output shafts cannot be synchronized, which is typically required to reengage a gear. Maintaining gear engagement in the gearbox during operation of the powertrain system in the engine stop freewheeling mode is thus desirable, particularly to enable engine restart using the clutch instead of a starter motor.

The disclosure may seek to address such challenges of maintaining the gearbox of the transmission arrangement in the engaged state during the freewheeling mode, where the engine is shut down and disconnected from the drive wheels. A technical benefit is provided by enhancing control over the position of one or more gear engaging devices during the engine stop freewheeling mode through monitoring and correcting unexpected positional changes. The proposed computer system provides control to maintain a gearbox gear in an engaged state, which is required for restarting the engine using the clutch of the powertrain system. Restarting the engine with the clutch provides a more fuel-efficient option compared to restarting the engine with a starter motor. Detecting unexpected changes and controlling the affected gear engaging device to return to its original (expected) position may prevent or at least reduce excessive differences in gearbox shaft speed. Control over the gear engaging device contributes to smoother gear reengagement and reduced wear on powertrain components. The configuration of the processing circuitry improves drivability, operational efficiency, and mechanical durability of the powertrain system. When the position of at least one gear engaging device in the gearbox changes to an unexpected state, the processing circuitry acts to return the gear engaging device to its original position. Acting promptly prevents, or at least reduce excessive divergence of gearbox shaft speeds, which could otherwise prevent successful gear reengagement. To this end, the proposed computer system provides monitoring of the engaged gear during temporary engine shutdowns while the vehicle is in motion.

One example of a vehicle comprising a powertrains system and a computer system will now be described in relation to a vehicle in the form of a heavy-duty vehicle, such as a truck.

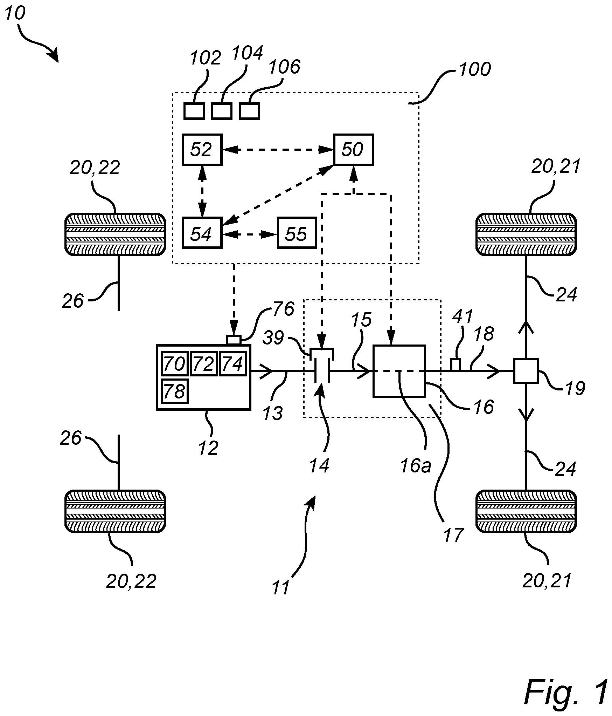

FIG. 1 schematically illustrates an exemplary vehicle 10. The vehicle 10 in FIG. 1 comprises a powertrain system 11. The powertrain system 11 is adapted to power the vehicle 10. The vehicle 10 comprises a plurality of wheels 20, typically comprising a set of drive wheels 21 and a set of non-driven wheels 22. The drive wheels 21 are powered by the powertrain system 11.

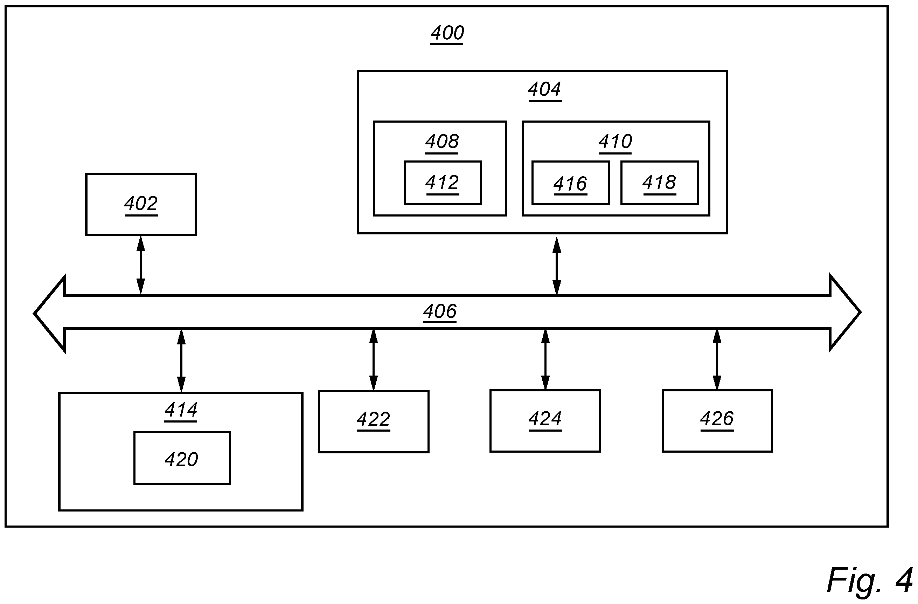

In addition, as depicted in FIG. 1, the vehicle 10 comprises a computer system 100. In this example, the powertrain system 11 comprises the computer system 100. In other examples, the computer system 100 is a separate part of the vehicle, which is configured to be in communication with the powertrain system 11. The computer system 100 may also be a remote server configured to be in communication with the powertrain system 11. The computer system 100 is configured to control the powertrain system 11. The computer system 100 here comprises a processing circuitry 102. The operations of the processing circuitry 102 will be further described herein. In FIG. 1, the computer system 100 also comprises a memory 104 and a system bus 106. These components and further optional technical details of the computer system are described in relation to an example of a computer system 400 in FIG. 4.

The computer system 100 is configured to selectively operate the powertrain system 11 in a number of operational modes, comprising at least the engine stop freewheeling mode ES-FM. In the engine stop freewheeling mode ES-FM, the output shaft of the engine is non-rotating, and the engine is disconnected from the one or more drive wheels. For ease of reference, the engine stop freewheeling mode ES-FM will in the following be denoted as the freewheeling mode ES-FM.

Optionally, the computer system 100 is configured to selectively operate the powertrain system 11 in a number of operational modes, comprising the engine stop freewheeling mode ES-FM, an additional freewheeling mode, denoted as an engine disconnected freewheeling mode (ED-FM), in which an output shaft of the engine is rotating, the engine is disconnected from the one or more drive wheels, and fuel is being supplied to the engine; in a coasting mode CM, in which the output shaft of the engine is rotating, the engine is connected to the one or more drive wheels, and fuel supply to the engine is interrupted; and in an engine braking mode EBM, in which the output shaft of the engine is rotating, the engine is connected to the one or more drive wheels, and the engine is operated so as to generate a braking effect.

In addition, the computer system 100 is configured to control an engine restart attempt of the vehicle 10, while the vehicle 10 is moving. The computer system 100 is thus configured to restart the engine 12 of the vehicle 10, while the vehicle 10 is moving.

Turning again to FIG. 1, the powertrain system 11 comprises an internal combustion engine 12. For ease of reference, the internal combustion engine is herein typically denoted as the engine, or sometimes as the ICE. The engine 12 comprises at least one cylinder 74 having a combustion chamber 70 and a reciprocating piston 72. More specifically, the engine 12 comprises a plurality of cylinders 74, each one having a corresponding combustion chamber 70 and a corresponding piston 72 arranged therein.

The powertrain system 11 also comprises a fuel injector 78, as illustrated in FIG. 1. The fuel injector 78 is here an integral part of the engine 12. The fuel injector 78 is configured to inject fuel into the engine 12. The fuel injector 78 may be any suitable type of injector capable of injecting fuel such as a diesel fuel, a gaseous fuel and the like. Typically, the fuel injector 78 is arranged in the cylinder 74, and axially above the piston 72. Each one of the cylinders 74 of the engine 12 comprises a corresponding fuel injector 78. The fuel injector 78 is controllable by the computer system 100. By way of example, the fuel injector 78 is controllable by the processing circuitry 102 of the computer system 100.

The fuel injector 78 is controllable by the processing circuitry 102 of the computer system 100 in order to allow the computer system 100 to switch between the various modes of the powertrain system 11, such as the engine stop freewheeling mode ES-FM, as described herein.

The engine 12 is configured to output a rotational speed via an engine output shaft 13, also referred to as the output shaft of the engine 12, as illustrated in e.g. FIG. 1. Hence, the powertrain system 11 comprises the engine output shaft 13. The engine output shaft 13 can either be in a rotating state or in a non-rotating state. When the engine output shaft 13 rotates, the engine 12 is typically turned on, while when the engine output shaft 13 is non-rotating, the engine 12 is typically shutdown.

The engine 12 is typically also configured to operate in a conventional four stroke fashion, i.e. operated by an intake stroke, a compression stroke, a combustion stroke, and an exhaust stroke. In this example, the engine is an internal diesel combustion engine, i.e. an engine designed to work according to the diesel process. By way of example, the engine 12 is a compression ignition internal combustion engine. The engine 12 may also be provided in other types of configurations or be operated by other types of fuels. The components of an engine are well-known, and thus not further described herein.

The powertrain system 11 here also comprises a starter motor 76. The starter motor 76 is here an integral part of the engine 12. Alternatively, the starter motor 76 is operatively connected to the engine 12 to allow the starter motor 76 to crank the engine 12, as is commonly known in the art. As such, the starter motor 76 is configured to crank the engine 12. Engine cranking is performed by controlling the starter motor 76 to engage a flywheel so as to initiate combustion.

Moreover, the powertrain system 11 comprises a transmission arrangement 17. The transmission arrangement 17 comprises a gearbox 16 and a controllable clutch 14. The gearbox 16 has a number of gear stages to obtain a set of gears. Each one of the gears has a corresponding gear ratio. The transmission arrangement 17 may sometimes be denoted simply as the transmission.

The transmission arrangement 17 is operatively connected to the engine 12 via a transmission input shaft 15. More specifically, the transmission input shaft 15 of the transmission arrangement 17 is operatively connected to the engine 12 via the clutch 14, which is selectively connected to the engine output shaft 13, e.g. via the flywheel, as is commonly known.

The transmission arrangement 17 comprises the transmission input shaft 15. The transmission input shaft 15 rotates with a certain rotational speed while the vehicle 10 is moving. Hence, the transmission input shaft 15 has a corresponding rotational speed. The transmission input shaft 15 is one example of a powertrain shaft. The transmission arrangement 17 also has a transmission output shaft 18 for providing a rotational speed to one or more drive wheels 21 of the vehicle 10, as schematically illustrated in FIG. 1. Briefly stated, the engine output shaft 13 transmits rotational speed from the engine 12 to the transmission arrangement 17 which further transmits the motion via the transmission output shaft 18 to the drive wheels 21, which in FIG. 1 is a pair of rear wheels. The drive wheels may also be denoted as the driven wheels or the driving wheels.

The transmission output shaft 18 rotates with a certain rotational speed while the vehicle 10 is moving. Hence, the transmission output shaft 18 has a corresponding rotational speed. The transmission output shaft 18 is another example of a powertrain shaft.

As illustrated in FIG. 1, the vehicle 10 here comprises a pair of front wheels and the pair of rear wheel. Moreover, the rear wheels are here driven wheels 21, while the front wheels are non-driven wheels 22. The driven wheels 21 are operatively connected to corresponding rotational drive axles 24. The non-driven wheels 22 are operatively connected to corresponding rotational non-driven axles 26. Typically, the vehicle 10 comprises one or more driven wheels 21 and one or more non-driven wheels 22. The driven wheels 21 are driven by the powertrain system 11.

As such, the pair of front non-driven wheels 22 are here operatively connected to the respective non-driven axles / shafts 26. In a similar vein, the pair of rear driven wheels 21 are here operatively connected to the respective driven axles / shafts 24.

Accordingly, as shown in FIG. 1, the transmission arrangement 17 is thus configured to transmit torque to the drive wheels 21. Typically, the transmission arrangement 17 is configured to transmit torque to the drive wheels 21 via the transmission output shaft 18 via one or more drive shaft(s) 24 or the like. In other words, the vehicle 10 is typically provided with an engine 12 operatively connected to the transmission arrangement 17 for transmitting torque to the drive wheels 21.

The transmission arrangement 17 is one of a semi-automatic transmission arrangement and an automatic transmission arrangement. Automatic transmission arrangements are common in heavy-duty vehicles to control engagement and disengagement of e.g. an automated disk-clutch between the engine 12 and the transmission arrangement 17. An automatic transmission arrangement is typically made up of the input shaft 15, one or more intermediate shafts 16a, one or more pair of gearwheels configured to be selectively in engagement within the gearbox 16, such as a gearwheel on an internal main shaft 16a which engages with gearwheels on another intermediate shaft 16a. The gearbox 16 typically also comprises another intermediate shaft 16a forming an output shaft of the gearbox 16, which is connected to the transmission output shaft 18 coupled to the drive wheels 21 via, for example, the drive shaft(s) 24. The gearbox 16 may be provided in several different configurations to provide a desirable number of gear stages, as is known in the art.

The drive shaft 24 rotates with a certain rotational speed while the vehicle 10 is moving. Hence, the drive shaft 24 has a corresponding rotational speed. The drive shaft 24 is another example of a powertrain shaft.

In one example, when the transmission arrangement 17 comprises one or more intermediate shafts 16a arranged in the transmission arrangement 17, each transmission intermediate shaft 16a rotates with a certain rotational speed while the vehicle 10 is moving. Hence, each transmission intermediate shaft 16a has a corresponding rotational speed. The transmission intermediate shaft(s) 16a are additional examples of powertrain shafts.

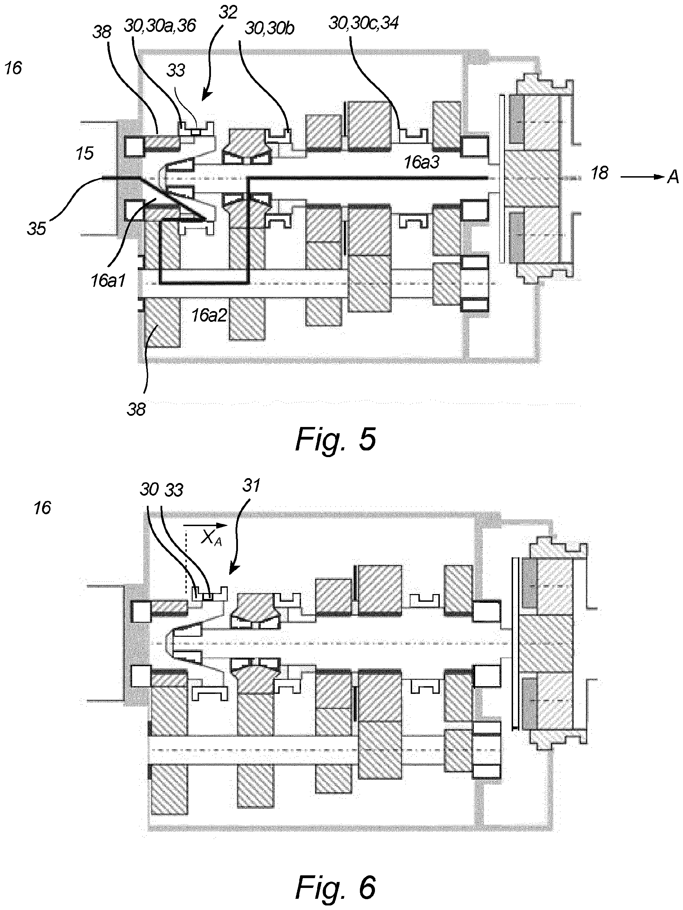

FIGS. 5 and 6 illustrates further components of an example of the gearbox 16 of the transmission arrangement 17. FIGS. 5 and 6 are schematic cross-sectional views of the gearbox 16. In FIGS. 5 and 6, the gearbox 16 of the transmission arrangement 17 is part of an automated manual transmission (AMT). The gearbox 16 extends in an axial direction A. The gearbox 16 comprises a number of intermediate shafts in the form of internal gear box intermediate shafts 16a1, 16a2 and 16a3. For ease of reference, the internal gear box intermediate shafts 16a1, 16a2 and 16a3 are denoted simply as the internal shafts of the gearbox 16. As described above, these internal shafts 16a1 to 16a3 are examples of the intermediate shafts of the transmission arrangement 17. Each one of the internal shafts 16a1 to 16a3 extends in the axial direction A.

In FIG. 5, the internal shaft 16a1 connects with the input shaft 15 of the transmission arrangement 17, that is connectable to the engine 12 through the clutch 14 and transfers rotational power from the engine 12 into the gearbox 16 in its connected state. The internal shaft 16a1 comprises at least one gear wheel 38, as shown in FIG. 5. Parallel to the internal shaft 16a1 is the countershaft 16a2, which holds corresponding gear wheels 38 that mesh with those on the internal shaft 16a1 to create specific gear ratios. The internal shaft 16a3 is the output shaft of the gearbox 16, and is responsible for transferring rotational power from the gearbox 16 to the shaft 18. The shaft 18 transfers rotation power to the wheels 21, forming the driving / driven wheels.

As such, the gearbox 16 contains a series of gear wheels 38 mounted on the respective shafts 16a1 to 16a3. Such configuration creates different gear ratios by meshing specific pairs of gear wheels 38 between the shafts 16a1 to 16a3. In FIG. 5, the gearbox 16 is set into an engaged gear state defining an engaged gear, e.g. gear 5, so that rotational motion can be transferred with a certain gear ratio through the engaged shafts 16a1 to 16a3 and gear wheels 38 as indicated by reference numeral 35.

Moreover, the gearbox 16 comprises one or more displaceable gear engaging devices 30, 30a to 30c, as shown in FIG. 5. By way of example, the gear engaging device 30 is a so-called gear engaging sleeve device, also referred to as a gear engaging sleeve selector device. One example of a gear engaging sleeve selector device is a sliding sleeve. Another example of a gear engaging sleeve selector device is a clutch collar.

These gear engaging devices 30, 30a to 30c are axially displaceable to engage or disengage specific gear wheels 38 to select the desired gear ratio. Each gear engaging device 30, 30a to 30c is displaceable between a gear wheel disengaging position 34 and a gear wheel engaging position 36. More specifically, the gear engaging device 30 is axially displaceable between the gear wheel disengaging position 34 and the gear wheel engaging position 36 in the axial direction A of the gearbox 16. Referring to FIG. 5, the gear wheel disengaging position 34 is exemplified by the position of the gear engaging device 30c and the gear wheel engaging position 36 is exemplified by the position of the gear engaging device 30a. That is, the gear engaging device 30c is positioned in the gear wheel disengaging position 34, while the gear engaging device 30a is positioned in the gear wheel engaging position 36.

Accordingly, in the gear wheel engaging position 36, a gear engaging device 30 is set in an engaged position relative to an associated gear wheel 38. In the gear wheel disengaging position 34, on the other hand, a gear engaging device 30 is set in a disengaged position relative to an associated gear wheel 38. Each gear engaging device 30 may typically be controlled by an actuator of common type, such as an electric actuator. In some examples, the gearbox 16 may also, or alternatively, comprise so called shift yokes for controlling the respective gear engaging device 30. Each gear engaging device 30 is thus controlled by the processing circuitry 102 by a respective actuator.

The gear engaging device 30 typically interacts with specific components within the gearbox to engage or disengage a gear. By way of example, the gear engaging device 30 engages with a coupling feature of the gear wheel. Such coupling features are typically in the form of dog teeth, dog clutch, splined surfaces, or similar mechanical interfaces that allow torque transfer between the gear wheel and the shaft. Dog teeth, also known as dog clutch, are commonly known and are e.g. designed to lock the gear wheel 38 to the shaft when the gear engaging device 30 slides into position. Engagement occurs when the gear engaging device 30 moves axially to gear wheel engaging position 36 to connect the gear wheel 38 to a respective internal shaft 16a, locking them together for suitable torque transfer. On the other hand, in the gear wheel disengaging position 34, the gear engaging device 30 is positioned away from the coupling features of the gear wheel 38. In the gear wheel disengaging position 34, the gear wheel 38 rotates freely on the shaft 16a, and no torque is transmitted.

Moreover, in this example, the gearbox 16 comprises one or more sensors 33, as shown in FIG. 5. Each sensor 33 is configured to monitor the linear position (in the axial direction A) of a corresponding gear engaging device 30 in real time. In FIG. 5, the sensor 33 is an integral part of the gear engaging device 30. However, the sensor 33 may in other examples be positioned directly on or at the gear engaging device 33. The sensor 33 is here a positional sensor of a common type, which is capable of providing measurements of the axial position of the gear engaging device 30, that can be transmitted to the processing circuitry 102 for analysis. By means of the sensor 33, a positional displacement of the gear engaging device 30 can be measured and monitored along the axial direction A of the gearbox 16, representing a linear displacement of the gear engaging device 30 relative to its engaged position 36. The gear wheel engaging position 36 also defines an expected position 32 of the gear engaging device 30 during the engine stop freewheeling mode ES-FM. FIG. 6 shows an example of a displaced gear engaging device 30, which has displaced from its expected position by a difference X_{A}, as measured in the axial direction A. In FIG. 6, the displaced position of the gear engaging device 30 is indicated by reference numeral 31. It may also be noted that the position 31 in FIG. 6 here amounts to an at least partly gear wheel disengaging position 34 of the gear engaging device 30.

Accordingly, FIGS. 5 and 6 show one example of determining the difference X_{A} between a position 31 (FIG. 6) of an axially displaced gear engaging device 30 in the engine stop freewheeling mode ES-FM and an expected position 32 (FIG. 5) of the gear engaging device 30 in an engaged gear state of the gearbox 16 in the engine stop freewheeling mode ES-FM.

It should be noted that the gearbox 16 may comprises a number of different types of gears and that corresponding gear engaging devices 30 may be arranged relative to these gears. Hence, in one example, the gearbox 16 comprises a first gear engaging device arranged in the gearbox 16 to engage a gear wheel 38 of a main gear, a second gear engaging device arranged in the gearbox 16 to engage a gear wheel 38 of a split gear, and a third gear engaging device arranged in the gearbox 16 to engage a gear wheel 38 of a range gear. As such, corresponding gear engaging devices may be arranged in the gearbox 16 to engage a gear wheel 38 of a main gear, a split gear, or a range gear of the gearbox.

To ensure smooth engagement during shifts, the gearbox 16 may also employ synchronizers, which match the rotational speeds of the gear wheels 38 and shafts 16a1 to 16a3 before the gear engaging devices 30, 30a to 30c are activated.

The gear selection process may typically be automated through the use of the actuators controlled by the processing circuitry 102. Such actuators are controlled to move the gear engaging devices 30, 30a to 30c to the required positions for the desired gear. These actuators may be so called shift actuators, as commonly known in the art.

As mentioned above, and as also illustrated in FIG. 1, the powertrain system 11 also comprises the clutch 14. The clutch 14 is here a controllable clutch. The controllable clutch 14 is e.g. controllable by the processing circuitry 102 of the computer system 100. Hence, the term controllable clutch refers to a clutch that is configured to be controllable by a processing circuitry, such as the processing circuity 102. For ease of reference, the controllable clutch may simply be referred to as the clutch 14. The clutch 14 can be arranged in several manners in the powertrain system 11. In FIG. 1, the controllable clutch 14 is arranged in-between the engine 12 and the transmission arrangement 17. The controllable clutch 14 is configured to operatively connect the transmission arrangement 17 with the engine 12. In particular, the controllable clutch 14 is configured to operatively connect the engine output shaft 13 of the engine 12 to the transmission input shaft 15 of the transmission arrangement 17. As such, the engine output shaft 13 of the engine 12 can be operatively connected to the transmission input shaft 15 of the transmission arrangement 17 via the controllable clutch 14 when a gear is engaged. As is commonly known in the art, the transmission arrangement 17 and the clutch 14 are hereby operable to select a gear ratio between the engine 12 and a pair of the driven wheels 21. While FIG. 1 schematically illustrates an example where the transmission arrangement 17 includes the controllable clutch 14, the controllable clutch 14 can also be a stand-alone device of the powertrain system 11.

The controllable clutch 14 is a mechanical component configured to transfers power from the engine 12 into the transmission arrangement 17. Moreover, the controllable clutch 14 is configured to disconnect the engine 12 from the gearbox 16 and the rest of the transmission arrangement 17, when required. The controllable clutch 14 is here configured for transmitting the rotational torque from the engine 12 to the driven wheels 21. By way of example, the controllable clutch 14 is one of a single clutch unit, a dual-clutch unit, or any other type of multi-clutch unit.

The controllable clutch 14 is controlled by the computer system 100. In particular, the controllable clutch 14 is controlled by the processing circuitry 102 of the computer system 100. By way of example, the controllable clutch 14 is controlled by the processing circuitry 102 of the computer system 100 via a clutch actuator 39, as illustrated in FIG. 1.

The controllable clutch 14 allows the computer system 100 to engage or disengage the engine's power from the drive wheels 21. The controllable clutch 14 is thus configured to engage the engine 12 to the gearbox 16 as well as to disengage the engine 12 from the gearbox 16. The controllable clutch 14 can also be used to allow smooth standing starts through clutch control, which partially engages allowing the clutch to slip. In this example, the controllable clutch 14 is also controlled to restart the engine 12 while the vehicle 10 is moving. As such, the controllable clutch 14 is used for restarting the engine 12.

By means of the clutch 14, the engine 12 can be connected to the one or more drive wheels 21. Also, by means of the clutch 14, the engine 12 can be disconnected from the one or more drive wheels, such as the wheels 21. The engine 12 may also be disconnected from the one or more drive wheels by setting the transmission to neutral, meaning that no gear is engaged.

Optionally, the vehicle 10 also includes a differential function 19 arranged in-between the pair of drive wheels 21 and the transmission arrangement 17. The differential function 19 mechanically (operatively) connects the output shaft 18 of the transmission arrangement 17 with the driven axles 24. By means of the differential function 19, the engine 12 can be connected to the one or more drive wheels 21. The differential function 19 is a well-known standard component and thus not further described herein.

The vehicle 10 may optionally include a service brake unit (not shown). The service brake unit may be a wet brake type or a dry brake type. The service brake unit is typically configured for performing a brake function. As an example, the service brake unit is a wheel brake. In addition, a service brake unit may be provided for each wheel.

Turning again to the transmission arrangement 17. The transmission arrangement 17 may be configured to be controlled by the driver and/or automatically via an electronic control unit (ECU). One example of an ECU is a transmission control unit. In FIG. 1, the powertrain system 11 comprises the transmission control unit (TCU) 50. The transmission control unit may also be denoted as a transmission electronic control unit (TECU). By way of example, the TCU 50 is an integral part of the computer system 100. The TCU 50 is configured to control the transmission arrangement 17. Hence, the TCU 50 is configured to control the controllable clutch 14 and the gearbox 16.

The computer system 100 may also comprise an automatically controlled engine start system 54. The automatically controlled engine start system 54 is configured to automatically control the operation of shutting down the engine 12 and restarting the engine 12 while the vehicle 10 is moving. The automatically controlled engine start system 54 is here an integral part of an automatic and predictive engine stop-and-start system. Such system is configured to predict suitable situations where the engine can be shut down and restarted, while the vehicle 10 is moving, and also configured to control the shutdown and restart of the engine 12, while the vehicle 10 is moving. The automatically controlled engine start system 54 may include a predictive cruise control system, or at least be configured to communicate with a predictive cruise control system of the vehicle 10. Hence, the computer system 100 may also comprise a predictive cruise control system. The predictive cruise control system is here an automatic predictive cruise control system 55, as illustrated in Fig. 1. A predictive automatic cruise control system is for example configured to control a speed of the vehicle based on a vehicle target speed in automatic manner. The automatic predictive cruise control system 55 is also configured to control the speed of the vehicle in an automatic manner. Thus, the predictive automatic cruise control system 55 is configured to control the vehicle according to a vehicle target speed in an automatic manner. The computers system 100 here comprises the automatic predictive cruise control system 55.

The predictive cruise control system 55 is configured to control the powertrain system 11 based on predicted changes in relation to the route ahead of the vehicle 10. A predictive cruise control system 55 may generally be configured to control the vehicle 10 based on topography and route data. The predictive cruise control system 55 may comprise, or communicate with, any one of a radar or lidar sensors used to detect vehicles and obstacles ahead, camera system to provide visual data about the road and traffic conditions, and GPS (Global Positioning System) to determine the vehicle position. The predictive cruise control system may further be configured to provide, or acquire, information about the road ahead, including changes in terrain, curves, and upcoming traffic conditions, speed and distance settings, brake control data, throttle control to maintain desired speed or accelerate, etc.

The predictive cruise control system 55 typically incorporates the basic functionalities of an automatic cruise control but adds predictive elements. For example, the predictive cruise control system 55 uses GPS and digital maps to anticipate road conditions ahead, such as curves, hills, and changes in the speed limit. Hereby, the predictive cruise control system 55 is configured to adjust the vehicle's speed proactively by considering the upcoming road conditions.

The engine 12 can in certain occasions be started by the starter motor 76. For this purpose, the processing circuitry 102 is configured to perform the restart engine by the starter motor 76. By way of example, the processing circuitry 102 is configured to control the starter motor 76 to engage the flywheel of the powertrain system 11 so as to initiate combustion, as is commonly referred to as an engine cranking operation.

In the context of the disclosure, however, the engine 12 is typically started by controlling the controllable clutch 14 to a torque transfer position. In the torque transfer position, the controllable clutch 14 is set in a state in which torque is transferable between the engine 12 and the wheels 20, more specifically the drive wheels 21 (here also corresponding to the rear wheels). By controlling the controllable clutch 14 to the torque transfer position, the controllable clutch 14 is allowed to change a torque transfer between the engine 12 and the drive wheels 21. In this manner, the computer system 100 is configured to perform the engine restart, as described herein. The controllable clutch 14 can be controlled in several different manners. By way of example, the controllable clutch 14 is controlled to gradually change the torque transfer between the engine 12 and the drive wheels 21. Alternatively, or in addition, the controllable clutch 14 can be controlled to change the torque transfer between the engine 12 and the drive wheels 21 in step-wise manner. Hence, the clutch 14 can either be set in a partly engaged state or in a fully engaged state start the engine.

As depicted in FIG. 1, the TCU 50 is also configured to be in communication with the automatically controlled engine start system 54. As such, the TCU 50 can control the controllable clutch 14 in response to data from the automatically controlled engine start system 54. In addition, the TCU 50 is here configured to be in communication with an electronic brake system (EBS) 52. The processing circuitry 102 can either be an integral part of the TCU, or a separate part configured to be in communication with the TCU 50.

In other examples, the TCU 50 comprises the automatically controlled engine start system 54. In addition, or alternatively, the TCU 50 comprises the predictive cruise control system 55.

The TCU 50 is here also configured to be in communication with an electronic control unit of the engine 12. Such electronic control unit may be denoted as an engine electronic control unit (EECU) or an engine management system (EMS). Both the TCU 50 and the EECU (and/or EMS) are typically integral parts of the computer system 100.

In the following, an exemplary set of operations for controlling the powertrain system 11 of the heavy-duty vehicle 10 will be further described. The powertrains system 11 is controlled by the computer system 100. The computer system 100 is intended to control the powertrain system 11 of the vehicle 10, while the vehicle 10 is moving, i.e. in a non-stationary state. Accordingly, the computer system 100 is configured to control the engine 12 of the vehicle 10 to the engine stop freewheeling mode ES-FM, while the vehicle 10 is moving.

The following operations are typically performed by the processing circuitry 102 of the computer system 100 so as to control the powertrain system 11, while the vehicle 10 is moving.

The processing circuitry 102 is configured to selectively operate the powertrain system 11 in the engine stop freewheeling mode ES-FM, in which the output shaft 13 of the engine 12 is non-rotating, and the engine 12 is disconnected from the one or more drive wheels 21. By way of example, the processing circuitry 102 is configured to select the engine stop freewheeling mode ES-FM and control the powertrain system 11 into the engine stop freewheeling mode ES-FM responsive to a predicted fuel saving for operating the powertrain system with the engine shutdown. In one example, the processing circuitry 102 predicts fuel saving for operating the powertrain system 11 with the engine shutdown in response to a potential up-coming freewheeling mode period. The fuel saving is determined from engine-idle fuel consumption data. Engine-idle fuel consumption data can be derived from a look-up table stored in the computer system 100, such as in the memory of the computer system 100. Engine-idle fuel consumption data is e.g. predetermined engine-idle fuel consumption data for the given type of vehicle and/or for the given type of engine model. The freewheeling mode period refers to a period for operating the powertrain system 11 in the freewheeling mode ES-FM. Hence, the fuel saving for the freewheeling mode ES-FM period is predicted in relation to a time period, and determined from engine-idle fuel consumption data indicative of operating the powertrain system 11 in an engine idle state over a corresponding time period. The fuel saving is thus a measure of the fuel saving of operating the engine in an idle state over a corresponding time period. The prediction is performed when the vehicle 10 is in motion, and typically when the vehicle 10 is approaching a downgrade or another part of the route where it may be suitable to operate the powertrain system 11 in the freewheeling mode ES-FM.

The potential up-coming freewheeling mode period is here identified based on any one of topography data and vehicle data, as is commonly known in the art. For example, the processing circuitry 102 is configured to predict the potential up-coming freewheeling mode period from topography data by analyzing and extracting relevant information about the route, including distance, elevation changes, road conditions, and other factors that can affect the vehicle's performance and fuel consumption. Specific examples of topography data are data indicative of road gradient / inclination. The processing circuitry 102 is configured to obtain topography data from various sources, such as from digital maps, GPS data, geographic information system (GIS) databases and/or a combination thereof. These sources may generally include relevant information about the road network, including roads, highways, elevation data, and potential destinations. In one example, the topography data is received by the processing circuitry 102 from a route planner system in the vehicle. The topography data may likewise be acquired by a so-called look ahead device, which is typically an integral part of an ordinary cruise control system. The look ahead device may in addition, or alternatively, be an integral part of the computer system 100.

Examples of vehicle data may be data about the mass of vehicle 10, which can be acquired from weight sensors etc., as further described herein.

The processing circuitry 102 may also be configured to take other parameters into consideration for predicting whether the powertrain system 11 should enter the engine stop freewheeling mode ES-FM. For example, the processing circuitry 102 may determine to control the powertrain system 11 into the engine stop freewheeling mode ES-FM based on predicting loss of kinetic energy for restarting the engine in the freewheeling mode using the controllable clutch 14, predicting fuel consumption needed to regain the predicted loss of kinetic energy.

As such, in this example, the processing circuitry 102 is configured to control the powertrain system 11 into the engine stop freewheeling mode ES-FM. In this context, it should be noted that in the engine stop freewheeling mode ES-FM, a gear of the gearbox 16 should always be engaged. The reason for maintaining a gear engaged during the engine stop freewheeling mode ES-FM is to enable that the engine 12 can be restarted using the clutch 14 when exiting the engine stop freewheeling mode ES-FM. Therefore, during the engine stop freewheeling mode ES-FM, the processing circuitry 102 is configured monitor the gearbox 16 of the transmission arrangement 17 according to the following operations.

Referring again to FIG. 1 in combination with FIGS 5 and 6, the processing circuitry 102 is configured to determine that a position 31 of the gear engaging device 30 is different from an expected position 32 of the gear engaging device 30 for an engaged gear. In this example, the position 31 is a current position of the gear engaging device 30, as determined by the sensor 33.

The term "expected position" typically refers to a predetermined or nominal position of the gear engaging device 30 required to maintain gear engagement of the relevant gear in the gearbox 16. The expected position 32 thus typically refers to the gear wheel engaging state (gear wheel engaging position 36) of the gear engaging device 30. Such position ensures proper engagement of the gear engaging device 30 with the corresponding coupling feature, such as the dog clutch teeth or splined surface of the gear wheel 38. By maintaining the gear engaging device 30 in the gear wheel engaging position 36, the chances of managing the driveline downstream the clutch 14 in an engaged state during the engine stop freewheeling mode ES-FM is improved. The expected position 32 is here also a position indicative of the axial alignment of the gear engaging device 30, along a predefined axis, e.g., the direction A of the gearbox 16. The expected position 32 may likewise be defined based on the mechanical configuration of the transmission arrangement 17, specifically the alignment necessary for the gear engaging device 30 to remain engaged with the coupling feature of the relevant gear wheel 38. Such alignment may also depend on the type of gear engaged (e.g., main gear, split gear, or range gear) and is relevant for enabling torque transfer and smooth engine restart using the clutch 14. As mentioned above in relation to FIG. 6, the difference between the position 31 of the gear engaging device 30 and the expected position 32 of the gear engaging device 30 is indicated by reference numeral X_{A}. The difference X_{A} here refers to a positional difference of the gear engaging device 30. More specifically, as illustrated in FIG. 6, the positional difference of the gear engaging device 30 is an axial positional difference along the axial direction A of the gearbox 16. The axial positional difference X_{A} is thus a difference in a linear displacement of the gear engaging device 30.

For example, a difference X_{A} exceeding about 20 mm in the axial direction A may amount to a non-desirable positional displacement of the gear engaging device 30, affecting the possibility of successfully reengaging the gear for ensuring engine restart using the clutch 14.

Accordingly, in some examples, the processing circuitry 102 is configured to determine to return the gear engaging device 30 to the expected position 32 if the determined difference X_{A} differs from the expected position 32 by more than 20 mm.

Moreover, the processing circuitry 102 is configured to determine to return the gear engaging device 30 to the expected position 32 in response to determining that the position 31 of the gear engaging device 30 is different from the expected position 32.

Additionally, the processing circuitry 102 is configured to control the gear engaging device 30 to return to the expected position 32 during the engine stop freewheeling mode ES-FM. As such, the processing circuitry 102 controls the gear engaging device 30 to return to the expected position 32 in response to the determination that the position 31 of the gear engaging device 30 is different from the expected position 32 at any point in time during the engine stop freewheeling mode ES-FM.

To this end, the processing circuitry 102 is configured to control the gear engaging device 30 to return to the expected position 32 in response to detecting an unexpected positional movement of the gear engaging device 30 during the engine stop freewheeling mode ES-FM. The processing circuitry 102 thus determines that the positional movement of the gear engaging device 30 during the engine stop freewheeling mode ES-FM amounts to an unexpected positional difference in relation to a comparison with the expected position 32 of the gear engaging device 30.

Accordingly, during engine stop freewheeling mode, the ability of the computer system 100 to compare the current (actual) position 31 of the gear engaging device 30 with the expected position 32 allows for a more precise monitoring and timely correction of unintended gear disengagement. Prompt corrective actions, such as returning the gear engaging device 30 to its expected position, may help maintain proper driveline engagement, prevent excessive differences in gearbox shaft speeds, and facilitate smooth and efficient engine restarts using the clutch 14.

In one example, the processing circuitry 102 is configured to determine that the position 31 of the gear engaging device 30 is different from the expected position 32 by comparing data indicative of the current position of the gear engaging device 30 with a threshold value indicative of the expected position 32 of the gear engaging device 30.

In one example, the processing circuitry 102 is configured to determine that the position 31 of the gear engaging device 30 is different from the expected position 32 by comparing data indicative of the current position of the gear engaging device 30 with a threshold value indicative of an acceptable position of the gear engaging device 30. The threshold value may be a position corresponding to the expected position 32.

In addition, or alternatively, the threshold value may refer to a predefined limit or permissible range of positional deviation for the gear engaging device 30, within which the position is considered consistent with the expected position. Positional deviations beyond the threshold are interpreted as unintended or non-acceptable gear disengagement and trigger corrective action. For example, the threshold value may be set to about 20 mm positional difference in the axial direction A.

The threshold value may also be defined to consider permissible variations in the position of the gear engaging device due to manufacturing tolerances. It may also be influenced by the resolution and precision of the sensor 33 monitoring the position of the gear engaging device 30.

The processing circuitry 102 is configured to receive data indicative of the position 31 of the gear engaging device 30 during the engine stop freewheeling mode ES-FM.

In one example, the processing circuitry 102 detects a change in the position of the gear engaging device 30 relative to the expected position 32 of the gear engaging device 30. For example, the processing circuitry 102 detects a change in the position 31 of the gear engaging device 30 based on the received data indicative of the position 31 of the gear engaging device 30 during the engine stop freewheeling mode ES-FM. In such example, the processing circuitry 102 compares the detected change in the position 31 of the gear engaging device 30 with a threshold value indicative of the expected position 32 of the gear engaging device 30.

The data indicative of the position 31 of the gear engaging device 30 can be collected in several different ways. By way of example, the data indicative of the position of the gear engaging device 30 is collected by the sensor 33. The sensor 33 is configured to monitor the position of the gear engaging device 30. As mentioned above, the sensor 33 is arranged at, or on, the gear engaging device 30. The position of the gear engaging device 30 is here continuously monitored during the engine stop freewheeling mode ES-FM.

In one extended example, the processing circuitry 102 is configured to monitor the duration of a gear reengagement attempt in the expected position 32 prior to exiting the engine stop freewheeling mode ES-FM. The gear reengagement attempt is performed by controlling the gear engaging device 30 to the gear wheel engaging position 36.

If the monitored duration exceeds a predefined time limit, the processing circuitry 102 is configured to abort the gear reengagement attempt. By way of example, the duration of the gear engagement must not exceed 0.5 s. Accordingly, the processing circuitry 102 may be configured to monitor the duration of the gear reengagement attempt in the expected position 32 and compare the duration of the gear reengagement attempt in the expected position 32 by the threshold value of 0,5 s. If the duration of the gear reengagement attempt in the expected position 32 exceeds 0,5 s, the processing circuitry 102 determines to abort the gear reengagement attempt.

In response to aborting the gear reengagement attempt, the processing circuitry 102 controls the gearbox 16 into a neutral state. By controlling the gearbox 16 to the neutral state, the processing circuitry 102 is configured to control the gearbox 16 to a state in which the engine can be restarted using the starter motor 76.

It should be noted that the processing circuitry 102 may also be configured to monitor the duration of a gear reengagement attempt in the expected position 32 during the restart of the engine (to terminate the engine stop freewheeling mode ES-FM). In addition, or alternatively, the processing circuitry 102 may also be configured to monitor the duration of a gear reengagement attempt in the expected position 32 after the engine restart.

In some examples, if the reengagement attempt is unsuccessful, the processing circuitry 102 is configured to prompt a driver of the vehicle to reduce the vehicle speed to a defined safe speed. For example, the processing circuitry 102 prompts the driver of the vehicle via a message on a display within the cabin of the vehicle. The prompt may contain a control command to reduce the vehicle speed to a defined safe speed using the service brakes. Accordingly, in these examples, the processing circuitry 102 is configured to prompt the driver of the vehicle to reduce the vehicle speed to a defined safe speed if the reengagement attempt is unsuccessful. Once the vehicle reaches the defined safe speed, the processing circuitry 102 may initiates an automatic engine restart using the starter motor and enables reengagement of a gear after the engine is restarted.

In one example, the processing circuitry 102 is further configured to monitor automatic gear selection during an active gear jump-out event and to disregard any new gear selection request until the active gear has been successfully reengaged and the engine has been restarted using the clutch 14.

In some examples, the processing circuitry 102 is configured to control the powertrain system 11 into the engine stop freewheeling mode ES-FM from topography data.

In some examples, the processing circuitry 102 is configured to control the powertrain system 11 into the engine stop freewheeling mode ES-FM from topography data and vehicle data.

Furthermore, in some examples, the processing circuitry 102 is configured to control exit of the engine stop freewheeling mode ES-FM by restarting the engine 12 using the controllable clutch 14.

In some examples, the processing circuitry 102 is further configured to predict a potential operational mode for the powertrain system 11 after the engine stop freewheeling mode ES-FM so as to determine whether the engine is to be used for propulsion or for an engine braking operation.

As mentioned above, the processing circuitry 102 is configured to control the powertrain system 11 into the freewheeling mode ES-FM by changing a rotating state of the output shaft 13 to a non-rotating state, and disconnecting the engine 12 from the drive wheels 21. Upon determining that the freewheeling mode ES-FM can contribute to fuel savings in situations where the engine restart is performed by the controllable clutch 14, as described above, the processing circuitry 102 typically also considers topography data and various vehicle data when initiating the activation of the freewheeling mode ES-FM. As such, the processing circuitry 102 is configured to initiate activation of the freewheeling mode ES-FM based on topography data and vehicle data.

For example, the processing circuitry 102 is configured to control the powertrain system 11 and the vehicle 10 from topography data by analyzing and extracting relevant information about the route, including distance, elevation changes, road conditions, and other factors that can affect the vehicle's performance and fuel consumption. The processing circuitry 102 is configured to obtain topography data from various sources, such as digital maps, GPS data, or geographic information system (GIS) databases. These sources may generally include relevant information about the road network, including roads, highways, elevation data, and potential destinations. In one example, the topography data is received by the processing circuitry 102 from a route planner system in the vehicle. The topography data may likewise be acquired by a so-called look ahead device, which is typically an integral part of an ordinary cruise control system. The look ahead device may in addition, or alternatively, be an integral part of the computer system 100.

The processing circuitry 102 may also typically be configured to determine a starting point in time for the freewheeling mode ES-FM based on topography data and vehicle data.

The automatically controlled engine start system 54 is typically configured to automatically control the engine 12 of the powertrain system 11 of vehicle 10, such as the above modes, including shutdown of the engine 12 and engine restarts while the vehicle 10 is moving along the route. The automatically controlled engine start system 54 is configured to control the powertrain system 11 from vehicle data that can be gathered from various vehicle sensors, from a navigation system of the vehicle 10, from data received from one or more control units of the vehicle 10, and/or from various technologies and systems for tracking and monitoring the vehicle 10. Thus, the processing circuitry 102 is configured to receive data and store data in the memory 104 of the computer system 100. As mentioned above, the processing circuitry 102 may in one example comprise the operation to determine a minimum time for the freewheeling mode ES-FM to achieve a break-even level between fuel saving and fuel consumption.

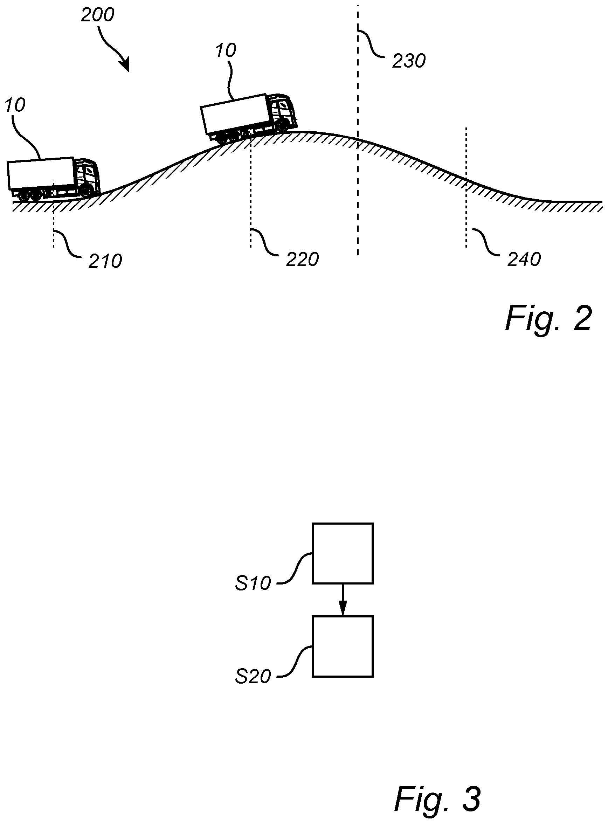

FIG. 2 illustrates an example of controlling a powertrain system of a vehicle, such as the powertrain system 11 of the vehicle 10 of FIG. 1, along a road. The road here corresponds to the intended route 200 for the vehicle 10. More specifically, FIG. 2 schematically illustrates an example of a heavy-duty vehicle in the form of a loaded truck 10 driving uphill, over a crest and downhill, in which the computer system 100 is used to control the powertrain system 11 according to the operations and methods, as described herein. Moreover, while the vehicle 10 is in motion along the road 200, the processing circuitry 102 typically continuously simulates and predict the speed behavior of the vehicle 10 to identify an opportunity for the engine stop freewheeling mode ES-FM. The processing circuitry 102 determines whether the vehicle 10 can be freewheeling in the freewheeling mode ES-FM along the road without falling below a minimum allowable speed.

The route 200 is represented with a number of indicative locations. For ease of reference, an extension of the intended route 200 is here indicated by a number of locations 210, 220, 230 and 240 along the road. The road segment between location 210 and location 220 is indicative of an uphill road segment, location 220 is indicative of a crest segment, or slightly after the crest, and the road segment between locations 220, 230 and 240 is indicative of a downhill segment. It should be noted that the crest is the highest point of a hill or slope in a road.

In this example, at location 210, the processing circuitry 102 predicts an opportunity for the engine stop freewheeling mode ES-FM at the location 220. The engine stop freewheeling mode is predicted using topography data over the road and vehicle data from the vehicle 10. At the 220, the processing circuitry 102 controls the powertrain system 11 into the engine stop freewheeling mode ES-FM.

While the vehicle 10 operates in the engine stop freewheeling mode ES-FM, the processing circuitry 102 monitors the position of the gear engaging device 30 to ensure that the gear engaging device 30 remains in the expected position 32 for the engaged gear. It should be noted that although the processing circuitry 102 may continuously monitor the position of the gear engaging device 30, in this example, at location 220, the processing circuitry 102 begins monitoring of the position of the gear engaging device 30 as the vehicle 10 enters the engine stop freewheeling mode ES-FM. The processing circuitry 102 receives data indicative of the position of the gear engaging device 30 from the sensor 33 arranged on the gear engaging device 30. The received data enables the processing circuitry 202 to determine whether the position of the gear engaging device 30 differs from the expected position 32.

At location 230, which is located on the downhill segment, the processing circuitry 102 determines, from the received data, that the position of the gear engaging device 30 differs from the expected position 32. In this example, the determination is made by comparing the received data with a threshold value indicative of the expected position 32. For example, the threshold accounts for permissible variations in the position of the gear engaging device 30 caused by vibrations or minor deflections along the axial direction A of the gearbox 16, as shown in FIG. 5. In this example, the threshold value is set such that deviations exceeding 20 mm in the axial direction A trigger a corrective action.

In response to the determination that the there is a positional difference of the gear engaging device 30 beyond the threshold value, the processing circuitry 102 determines to return the gear engaging device 30 to the expected position 32. The corrective action is typically taken promptly to prevent excessive differences in the rotational speeds of the gearbox input and output shafts, which might otherwise hinder successful gear reengagement, and subsequent engine restart using the clutch 14. The corrective action is exemplified here by the processing circuitry 102 ensuring that the gear engaging device 30 remains engaged with a corresponding coupling feature of the corresponding gear wheel 38.

As such, the processing circuitry 102 ensures continuous monitoring of the position of the gear engaging device 30 during the engine stop freewheeling mode and applies corrective actions as necessary. The ability to maintain the gear engaging device 30 in the expected position 32 enhances drivability and facilitates efficient engine restarts using the controllable clutch 14.

Typically, the processing circuitry 102 monitors the position of the gear engaging device 30 until the powertrain system 11 exits the engine stop freewheeling mode ES-FM, which is indicated in FIG. 2 by location 240.

When exiting the engine stop freewheeling mode ES-FM, the processing circuitry 102 restarts the engine 12 using the controllable clutch 14, ensuring a seamless transition to the next operational mode. In this example, the engine 12 is restarted by the clutch 14 in an automatic manner using the automatically controlled engine start system 54, i.e. without intervention from the driver.

The processing circuitry 102 may determine to exit the engine stop freewheeling mode ES-FM based on received topography data and various vehicle data. The processing circuitry 102 may also predict the next operational mode for the powertrain system 11, such as determining whether the engine 12 will be used for propulsion or for engine braking.

It should be noted that if the monitored duration of the reengagement attempt of the gear engaging device 30 exceeds a predefined time limit, the processing circuitry 102 may typically abort the reengagement attempt to prevent mechanical damage or inefficiencies.

The transitions between the various operational modes of the powertrain system 10, including the freewheeling modes, can be performed in an automatic manner by the computer system 100, including e.g. an automatically controlled engine start system. The automatically controlled engine start system is typically an integral part of a so-called automatic and predictive engine stop-and-start system for vehicles. Automatic and predictive engine stop-and-start systems are configured to automatically control one or more vehicle and powertrains operations, such as shutting-down and restarting the engine, using predictive data and real-time information.

Optionally, the computer system 100 is configured to selectively operate the powertrain system 11 in a number of operational modes, comprising at least the engine stop freewheeling mode ES-FM and at least one additional operational mode, such as a propulsion mode, in which the engine is arranged to provide propulsion to the drive wheels.

Optionally, the computer system 100 is configured to selectively operate the powertrain system 11 in a number of operational modes, comprising at least the engine stop freewheeling mode ES-FM, the additional freewheeling mode, denoted as the engine disconnected freewheeling mode (ED-FM), in which an output shaft of the engine is rotating, the engine is disconnected from the one or more drive wheels, and fuel is being supplied to the engine; in a coasting mode (CM), in which the output shaft of the engine is rotating, the engine is connected to the one or more drive wheels, and fuel supply to the engine is interrupted; and in an engine braking mode (EBM), in which the output shaft of the engine is rotating, the engine is connected to the one or more drive wheels, and the engine is operated so as to generate a braking effect.

An operational mode where the output shaft of the engine 12 is rotating indicates that the engine 12 is in an active state, such as in the propulsion mode, an operating mode, engine-on mode, power generation mode, or idling mode. In the engine disconnected freewheeling mode ED-FM, the engine 12 is active and running, but not engaged with the drivetrain for propulsion.

Optionally, the computer system 100 is configured to selectively operate the powertrain system 11 in a number of operational modes, comprising at least the engine stop freewheeling mode ES-FM, the engine disconnected freewheeling mode (ED-FM), and at least one additional operational mode, such as the propulsion mode.

The processing circuitry 102 can selectively operate the powertrain system 11 in the number of operational modes, comprising the engine disconnected freewheeling mode ED-FM, the engine stop freewheeling mode ES-FM, the coasting mode CM, the propulsion mode and the engine braking mode EBM.

As mentioned herein, the computer system 100 may be an integral part of the powertrain system 11, wherein the powertrain system 11 comprises at least the engine 12, the controllable clutch 14, the transmission arrangement 17 arranged to be coupled to the engine 12 by means of the controllable clutch 14, and wherein the transmission arrangement 17 further comprises the output shaft 18 configured to be coupled to the drive axle 24 of the set of drive wheels 21.

FIG. 3 is a flow chart of a method according to an example. More specifically, FIG. 3 is an exemplary computer implemented method 300 according to an example. The computer-implemented method 300 of FIG. 3 is also intended for controlling the powertrain system 11 of the heavy-duty vehicle 10 in FIG. 1. The method 300 is typically implemented by the processing circuitry 102. As mentioned above in relation to FIGS. 1 and 2, the powertrain system 11 is selectively operable in a number of operational modes, comprising at least the engine stop freewheeling mode ES-FM.

As illustrated in FIG. 3, the computer-implemented method 300 comprises a step S10 of determining, by the processing circuitry 102 of the computer system 100, and during the engine stop freewheeling mode, that a position 31 of the gear engaging device 30 is different from an expected position 32 of the gear engaging device 30 for an engaged gear.

Subsequently, the method comprises a step S20 of determining, by the processing circuitry 102 of the computer system 100, to return the gear engaging device 30to the expected position 32 in response to that the position 31 of the gear engaging device 30 is determined to be different from the expected position 32, determine to return the gear engaging device 30 to the expected position. 32.

Typically, the method 300 here also comprises a step of returning the gear engaging device 30 to the expected position 32. The step of returning the gear engaging device 30 to the expected position 32 is performed during the engine stop freewheeling mode ES-FM. Accordingly, the method comprises controlling the gear engaging device 30 to the expected position 32.

It should be noted that the computer system 100 may be an integral part of the powertrain system 11. In other examples, the computer system 100 and the powertrain system 11 may be separate parts configured to communicate with each other. The computer system 100 may also be a part of a remote server or the like. Hence, in some examples, there is provided a system comprising the powertrain system 11 and the computer system 100, wherein the computer system 100 is configured to be in communication with the powertrain system 11 so as to control the powertrain system 11 of the vehicle 10.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 will now be described in relation to FIG. 4.

FIG. 4 is a schematic diagram of a computer system 400 for implementing examples disclosed herein. The computer system 400, as described in relation to FIG. 4, can be used as the computer system 100, as described in FIGS. 1 to 3, and FIGS. 4 and 5. The computer system 400 is adapted to execute instructions from a computer-readable medium to perform these and/or any of the functions or processing described herein. The computer system 400 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Engineers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples.

Example 1: A computer system 100 for a powertrain system 11 of a vehicle 10, the powertrain system comprising an internal combustion engine 12 connectable to one or more drive wheels 21, a transmission arrangement 17 arranged to be coupled to the internal combustion engine by means of a controllable clutch 14, the transmission arrangement having a gearbox 16 with a displaceable gear engaging device 30, the gear engaging device being displaceable between a gear wheel disengaging position and a gear wheel engaging position, wherein the computer system comprises processing circuitry 102 configured to selectively operate the powertrain system in a number of operational modes comprising at least an engine stop freewheeling mode ES-FM, in which an output shaft of the engine is non-rotating, and the engine is disconnected from the one or more drive wheels, and wherein the processing circuitry is further configured to determine, during the engine stop freewheeling mode, that a position 31 of the gear engaging device is different from an expected position 32 of the gear engaging device for an engaged gear; and, in response to that the position of the gear engaging device is determined to be different from the expected position, determine to return the gear engaging device to the expected position.

Example 2. Computer system according to example 1, wherein the processing circuitry is configured to determine that the position of the gear engaging device is different from the expected position of the gear engaging device by comparing data indicative of a current position of the gear engaging device with a threshold value indicative of the expected position of the gear engaging device.

Example 3. Computer system according to example 1 or example 2, wherein the processing circuitry is configured to receive data indicative of the position of the gear engaging device during the engine stop freewheeling mode.

Example 4. Computer system according to any previous examples, wherein the processing circuitry is configured to detect a change in the position of the gear engaging device relative to the expected position of the gear engaging device.

Example 5. Computer system of example 4, wherein the processing circuitry is configured to compare the detected change in the position of the gear engaging device with a threshold value indicative of the expected position of the gear engaging device.

Example 6. Computer system according to any one of preceding examples, wherein the positional difference of the gear engaging device is an axial positional difference along an axial direction A.

Example 7. Computer system of example 6, wherein the processing circuitry is configured to determine to return the gear engaging device to the expected position if the determined difference differs from the expected position by more than 20 mm.

Example 8. Computer system according to any one of preceding examples, wherein the data indicative of the position of the gear engaging device is collected by a sensor 33 configured to monitor the position of gear engaging device.

Example 9. Computer system of example 8, wherein the sensor is arranged at, or on, the gear engaging device.

Example 10. Computer system according to any one of preceding examples, wherein the processing circuitry is configured to control the gear engaging device to return to the expected position.

Example 11. Computer system according to any one of preceding examples, wherein the gear engaging device is arranged in the gearbox to engage a gear wheel of a main gear of the gearbox, and/or wherein the gear engaging device is arranged in the gearbox to engage a gear wheel of a split gear of the gearbox, and/or wherein the gear engaging device is arranged in the gearbox to engage a gear wheel of a range gear of the gearbox.

Example 12. Computer system according to any one of preceding examples, wherein the processing circuitry is configured to monitor duration of a gear reengagement attempt by the gear engaging device in the expected position.

Example 13. Computer system of example 12, wherein the processing circuitry is configured to abort the gear reengagement attempt if the monitored duration exceeds a predefined time limit.

Example 14. Computer system according to any one of preceding examples, wherein the processing circuitry is configured to control the powertrain system into the engine stop freewheeling mode from topography data.

Example 15. Computer system according to any one of preceding examples, wherein the processing circuitry is configured to exit engine stop freewheeling mode by restarting the engine using a controllable clutch.

Example 16. Computer system according to any one of preceding examples, wherein the processing circuitry is further configured to predict a potential operational mode for the powertrain system after the freewheeling mode so as to determine whether the engine is to be used for propulsion or for an engine braking operation.

Example 17. A powertrain system 11 comprising a computer system 100 according to any one of examples 1 to 16, an internal combustion engine 12, a controllable clutch 14, and a transmission arrangement 17 arranged to be coupled to the internal combustion engine by means of the controllable clutch, and wherein the transmission arrangement further comprises an output shaft 18 configured to be coupled to a driven axle 24 of a set of drive wheels 21.

Example 18. A vehicle 1 comprising a computer system of any of the examples 1 to 16 and/or a powertrain system according to example 17.

Example 19. A computer-implemented method 300 for controlling a powertrain system 11 of a vehicle 10, the powertrain system comprising an internal combustion engine 12 connectable to one or more drive wheels 21, the powertrain system being operable in a number of operational modes, including at least a freewheeling mode FM, in which an output shaft of the engine is non-rotating, and the engine is disconnected from the one or more drive wheels, wherein the method comprises: determining S10, during the engine stop freewheeling mode, and by processing circuitry 102 of a computer system 100, that a position of a gear engaging device is different from an expected position of the gear engaging device for an engaged gear; and determining S20, by processing circuitry of the computer system, to return the gear engaging device to the expected position in response to that the position of the gear engaging device is determined to be different from the expected position, determine to return the gear engaging device to the expected position.

Example 20. A computer program product comprising program code for performing, when executed by the processing circuitry, the method of example 19.

Example 21. A non-transitory computer-readable storage medium comprising instructions, which when executed by the processing circuitry, cause the processing circuitry to perform the method of example 19.

The term "operatively connected", as used herein, typically means that a first component is in operative relation to another second component. By way of example, the term operatively connected means that the first component is connectable, or connected, to the second component in a manner allowing a transfer of a rotational movement and/or rotational torque from the first component to the second component. Therefore, the term encompasses a functional construction in which two components are connected such that the rotational speed of the first component corresponds to the rotational speed of the second component. However, the term also encompasses a functional construction in which there is a ratio between the rotational movement of the first component and the rotational movement of the second component, i.e., the rotational speed of the second component is proportional to the rotational speed of the first component.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for a powertrain system (11) of a vehicle (10), the powertrain system comprising an internal combustion engine (12) connectable to one or more drive wheels (21), a transmission arrangement (17) arranged to be coupled to the internal combustion engine by means of a controllable clutch (14), the transmission arrangement having a gearbox (16) with a displaceable gear engaging device (30), the gear engaging device being displaceable between a gear wheel disengaging position (34) and a gear wheel engaging position (36), wherein the computer system comprises processing circuitry (102) configured to selectively operate the powertrain system in a number of operational modes comprising at least an engine stop freewheeling mode (ES-FM), in which an output shaft of the engine is non-rotating, and the engine is disconnected from the one or more drive wheels, and
wherein the processing circuitry is further configured to determine, during the engine stop freewheeling mode, that a position (31) of the gear engaging device is different from an expected position (32) of the gear engaging device for an engaged gear; and, in response to that the position of the gear engaging device is determined to be different from the expected position, determine to return the gear engaging device to the expected position.

2. Computer system according to claim 1, wherein the processing circuitry is configured to determine that the position of the gear engaging device is different from the expected position of the gear engaging device by comparing data indicative of a current position of the gear engaging device with a threshold value indicative of the expected position of the gear engaging device.

3. Computer system according to claim 1 or claim 2, wherein the processing circuitry is configured to receive data indicative of the position of the gear engaging device during the engine stop freewheeling mode.

4. Computer system according to any one of preceding claims, wherein the processing circuitry is configured to detect a change in the position of the gear engaging device relative to the expected position of the gear engaging device.

5. Computer system of claim 4, wherein the processing circuitry is configured to compare the detected change in the position of the gear engaging device with a threshold value indicative of the expected position of the gear engaging device.

6. Computer system according to any one of preceding claims, wherein the processing circuitry is configured to control the gear engaging device to return to the expected position.

7. Computer system according to any one of preceding claims, wherein the gear engaging device is arranged in the gearbox to engage a gear wheel of a main gear of the gearbox, and/or wherein the gear engaging device is arranged in the gearbox to engage a gear wheel of a split gear of the gearbox, and/or wherein the gear engaging device is arranged in the gearbox to engage a gear wheel of a range gear of the gearbox.

8. Computer system according to any one of preceding claims, wherein the processing circuitry is configured to monitor duration of a gear reengagement attempt by the gear engaging device in the expected position.

9. Computer system of claim 8, wherein the processing circuitry is configured to abort the gear reengagement attempt if the monitored duration exceeds a predefined time limit.

10. Computer system according to any one of preceding claims, wherein the processing circuitry is configured to determine to exit engine stop freewheeling mode by restarting the engine using the controllable clutch.

11. A powertrain system (11) comprising a computer system (100) according to any one of claims 1 to 10, an internal combustion engine (12), a controllable clutch (14), and a transmission arrangement (17) arranged to be coupled to the internal combustion engine by means of the controllable clutch, and wherein the transmission arrangement further comprises an output shaft (18) configured to be coupled to a driven axle (24) of a set of drive wheels (21).

12. A vehicle (1) comprising a computer system of any of the claims 1 to 10 and/or a powertrain system according to claim 11.

13. A computer-implemented method (300) for controlling a powertrain system (11) of a vehicle (10), the powertrain system comprising an internal combustion engine (12) connectable to one or more drive wheels (21), the powertrain system being operable in a number of operational modes, including at least an engine stop freewheeling mode (ES-FM), in which an output shaft of the engine is non-rotating, and the engine is disconnected from the one or more drive wheels, wherein the method comprises:
- determining (S10), during the engine stop freewheeling mode, and by processing circuitry (102) of a computer system (100), that a position of a gear engaging device is different from an expected position of the gear engaging device for an engaged gear; and
- determining (S20), by processing circuitry of the computer system, to return the gear engaging device to the expected position in response to that the position of the gear engaging device is determined to be different from the expected position, determine to return the gear engaging device to the expected position.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
